# EUROPEAN PATENT APPLICATION

(11) **EP 1 840 998 A2**
(43) Date of publication of application: **03.10.2007**
(21) Application number: 07003139.8
(22) Date of filing: 14.02.2007
(51) Int. Cl.: H01M 8/06, H01M 8/10

(54) **Fuel cell system**

(30) Priority: 30.03.2006 JP 2006095175
(71) Applicant: KABUSHIKI KAISHA TOSHIBA, Tokyo 105-8001 (JP)
(72) Inventor: Sato, Yuusuke, c/o Int. Prop. Div., Tokyo 105-8001 (JP); Kawano, Koichiro, c/o Int. Prop. Div., Tokyo 105-8001 (JP)
(74) Representative: HOFFMANN EITLE

(57) **Abstract**

A fuel cell system includes a power generation unit (20), a fuel supply source (27), gas-liquid separator (10, 110, 201, 301, 401), and a circulating circuit (P19, L19, 20, L26). The gas-liquid separator (10, 110, 201, 301, 401) includes a lyophobic tube (2, 103, 203, 307, 404), a lyophilic tube (3, 102, 202, 306) which communicates with the lyophobic tube, and a lyophilic member (4, 104, 309, 403) provided to clog a passage of the lyophobic tube or a lyophobic member provided to clog a passage of the lyophilic tube.

## Description

The present invention relates to a fuel cell system.

A direct methanol fuel cell (DMFC) includes a membrane electrode assembly (MEA). The membrane electrode assembly, an anode fluid passage plate, and a cathode fluid passage plate are alternately layered such that the MEA is sandwiched between the anode fluid passage plate and the cathode fluid passage plate.
When a mixed solution of water and methanol is fed to an anode through the anode fluid passage plate, a reaction expressed by the following formula (1) occurs on the anode to thereby generate carbon dioxide (CO₂).

CH₃OH + H₂O → CO₂ + 6H⁺ + 6e⁻ ... (1)

When air containing oxygen is fed to a cathode through the cathode fluid passage plate, a reaction expressed by the following formula (2) occurs to thereby generate water (H₂O).

3/2O₂ + 6H⁺ + 6e⁻ → 3H₂O ... (2)

Carbon dioxide generated at the anode and the mixed solution of water and methanol are discharged from the anode in a state of gas-liquid two-phase.

Conventionally, the gas-liquid two-phase flow discharged from the anode is separated into liquid and gas by utilizing the density difference. The liquid is returned to a mixing tank and recycled. The gas is discharged into the air through a gas liquid separating membrane. The water generated at the cathode is separated from air by utilizing the density difference. Part of steam discharged from the cathode is condensed by a condenser, and then separated from air by utilizing the density difference.

The DMFC using such a fuel circulating path suffers from the following problems, however. When the DMFC is tilted or turned upside down, the gas liquid separating operation is not well performed, and is instable or the liquid leaks out of the DMFC. Since the density difference is utilized, it is necessary to secure a sufficient height size of the gas liquid separating means. This hinders the size reduction of the fuel cell system.

JPA 2005-238217 incorporated by reference discloses a gas liquid separator which receives a gas-containing liquid formed by mixing air bubbles into liquid, and separates it into air and liquid.

As described above, in the DMFC, CO₂ is generated at the anode through the power generation. The amount of CO₂ generated varies depending on a state of the power generation. Accordingly, a ratio of the gas and the liquid in the gas-liquid two-phase flow, which is discharged from the anode, also varies. When the fuel cell is almost in resting state, although depending on the amount of fuel fed to the anode, fluid consisting of almost 100 percent liquid is discharged from the anode, but a ratio of the liquid in the gas-liquid two-phase flow is sometimes 1/20 or less (5% or less) on some power generating conditions at the time of power generation. When the ratio of the liquid is too low, for example, it is 1/20 (5%) or less, the gas-liquid two-phase flow forms a slug flow. More specifically, in the DMFC, the gas-liquid two-phase discharged from the anode changes its state from a state that a little amount of gas is present in the liquid to a state that a little amount of liquid is present in gas on some operation conditions.

In a gas liquid separator disclosed in JPA 2005-238217, liquid drops attach to the surface of a gas extracting member when the gas extracting member is located on the lower side and when a gas-liquid two-phase flow in which a little amount of liquid is present in gas is introduced into the gas extracting member. For this reason, the gas permeation is hindered and the gas liquid separation mechanism does not satisfactorily function. Also, even when the gas-liquid two-phase flow in which a little amount of gas is present in the liquid is introduced into a gas extracting member, air bubbles attach to the surface of the gas extracting member, and the gas liquid separation mechanism does not satisfactorily function, in some cases.

JPA 2004-000950 incorporated by reference discloses a reaction chamber for generating hydrogen gas from an aqueous solution of metal hydride, such as boron sodium hydride. Hydrophilic screens or films are located at the inlet and the outlet of the reaction chamber. The inner surface or the outer surface of the reaction chamber is covered with hydrophobic films. The disclosed technology can separate a liquid-gas mixture generated in the reaction chamber into liquid and gas, but cannot separate a gas-liquid two-phase flow, which is introduced into the chamber, into liquid and gas.

A fuel cell system according to the invention comprises: a power generation unit; a fuel supply source which supplies fuel to the power generation unit; gas-liquid separator for separating a liquid-gas mixture discharged from the power generation unit into gas and liquid; and a circulating circuit which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator comprises: a lyophobic tube; a lyophilic tube which communicates with the lyophobic tube; and a lyophilic member provided to clog a passage of the lyophobic tube or a lyophobic member provided to clog a passage of the lyophilic tube.

A fuel cell system according to the invention comprises: a power generation unit; a fuel supply source which supplies fuel to the power generation unit; gas-liquid separator for separating a liquid-gas mixture discharged from the power generation unit into gas and liquid; and a circulating circuit which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator comprises: a tube lyophilic to the liquid; and a tube lyophobic to the liquid, the tube being inserted into the lyophilic tube and having a closed end; and a partition wall provided between an outer wall of the lyophobic tube and an inner wall of the lyophilic tube.

A fuel cell system according to the invention comprises: a power generation unit; a fuel supply source which supplies fuel to the power generation unit; gas-liquid separator for separating a liquid-gas mixture discharged from the power generation unit into gas and liquid; and a circulating circuit which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator comprises: a main flow passage having a closed end; a first passage provided in one of surfaces of the main flow passage; a second first passage provided in the surface of the main flow passage, which is opposite to the surface including the first passage; a first lyophobic member provided in an opening which allows the main flow passage to communicate with the first passage; a first lyophilic member provided in an opening which allows the main flow passage to communicate with the first passage; a second lyophilic member provided in an opening which allows the main flow passage to communicate with the second first passage, while facing the opening in which the first lyophobic member is provided; a second lyophobic member provided in an opening which allows the main flow passage to communicate with the second first passage, while facing the opening in which the first lyophilic member is provided; a first partition wall to partition the first passage into an upstream section and a downstream section between the first lyophobic member and the first lyophilic member; and a second partition wall to partition the second passage into an upstream section and a downstream section between the second lyophobic member and the second lyophilic member.

A fuel cell system according to the invention comprises: a power generation unit; a fuel supply source which supplies fuel to the power generation unit; gas-liquid separator for separating a liquid-gas mixture discharged from the power generation unit into gas and liquid; and a circulating circuit which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator comprises: a case; a lyophilic member stretched to divide the inner space of the case into a first space and a second space; a lyophobic tube which communicates with the first space; and a lyophobic member provided in an opening formed in a wall surface of the case in the first space.

A fuel cell system according to the invention comprises: a power generation unit; a fuel supply source which supplies fuel to the power generation unit; gas-liquid separator for separating a liquid-gas mixture discharged from the power generation unit into gas and liquid; and a circulating circuit which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator comprises: a case; a lyophilic member stretched to divide the inner space of the case into a first space and a second space; a lyophilic tube which communicates with the first space; and a lyophilic member provided in an opening formed in a wall surface of the case in the first space.

The invention can be more fully understood from the following detailed description when taken in conjunction with the accompanying drawings, in which:
FIG. 1 is a schematic diagram showing a fuel cell according to a first embodiment;
FIG. 2 is a schematic diagram showing another fuel cell according to the first embodiment;
FIG. 3 is a schematic diagram showing a fuel cell according to a second embodiment;
FIG. 4A is a perspective view showing gas-liquid separator assembled in the fuel cell of FIG. 3;
FIG. 4B is a cross sectional view taken along the line IV-IV in FIG. 4A;
FIG. 5A is a perspective view showing gas-liquid separator assembled in a fuel cell according to a third embodiment;
FIG. 5B is a cross sectional view taken along the line I-I in FIG. 5A; and
FIG. 6 is a cross sectional view showing gas-liquid separator assembled in a fuel cell according to a fourth embodiment.

Embodiments of the present invention will be described with reference to the accompanying drawings.

### (First Embodiment)

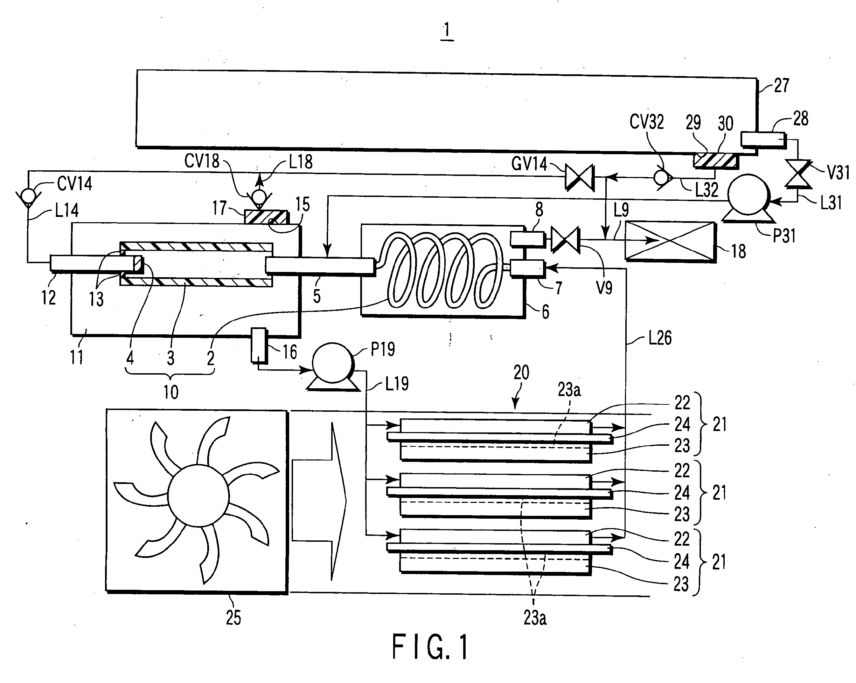

As shown in FIG. 1, a fuel cell system 1 includes gas-liquid separator 10, a mixing tank 11, a volatility organic compound (VOC) removing unit 18, a power generation unit 20, and a removal fuel tank 27.

The gas-liquid separator 10 includes a tube 2 being lyophobic to liquid, a tube 3 being lyophilic to liquid, which communicates with the lyophobic tube 2, and a lyophobic member 4 provided so as to clog a passage of the lyophilic tube 3. The lyophobic tube 2 communicates with the lyophilic tube 3 through a communication tube 5. The lyophobic tube 2 is spirally wound to increase its contact area with fluid flowing through the lyophobic tube 2, and is housed in a gas tank 6. The gas tank 6 is provided with a fluid supply port 7 which is supplied with a gas-liquid two-phase flow discharged from an anode of a fuel cell main body proper, and a gas exhaust port 8 for discharging gas having permeated through the wall of the lyophobic tube 2 and having been collected. The gas exhaust port 8 communicates with the VOC removing unit 18 by way of a line L9. A valve V9 is coupled to the line L9.

The lyophilic tube 3, which communicates with the lyophobic tube 2 by way of the communication tube 5, is housed in the mixing tank 11. An end of the communication tube 5, which is closer to its coupling part to the lyophobic tube 2, is housed in the gas tank 6. The other end of the communication tube 5, which is close to its coupling part to the lyophilic tube 3, is housed in the mixing tank 11. The communication tube 5 may be omitted, and if omitted, the lyophobic tube 2 may be directly connected to the lyophilic tube 3. A gas exhaust tube 12 is inserted to the end of the lyophilic tube 3, which is opposite to the communication tube 5. A partition wall 13 is provided between an outer wall of the gas exhaust tube 12 and an inner wall of the partition wall 13 to clog a flow of fluid flowing through the lyophilic tube 3. The partition wall 13 may be integrally molded with the lyophilic tube 3. A lyophobic member 4 is provided at the end of the gas exhaust tube 12, which is inserted in the partition wall 13, and the fluid flowing through the lyophilic tube 3 is cloged with the lyophobic member 4. A line L14 is coupled to the end of the gas exhaust tube 12, which is opposite to its end inserted in the lyophilic tube 3, and joins with the line L9. The line L14 is provided with a check valve CV14, and with a valve GV14 located downstream of the check valve CV14.

The mixing tank 11 containing the lyophilic tube 3 is provided with a gas exhaust port 15 and a liquid feeding port 16. A lyophobic member 17 is stretched in the gas exhaust port 15. A line L18 coupled to the gas exhaust port 15 joins with the line L14 at a position located downstream of the check valve CV14 and upstream of the valve GV14. The line L18 is provided with a check valve CV18 and with the valve GV14 at a position located downstream of the check valve CV18. The liquid feeding port 16 communicates with a passage inlet of an anode fluid passage plate 22 of the fuel cell main body proper by way of a line L19, for example, a pipe. The line L19 is provided with a pump P19.

The check valves CV14 and CV18, and the valves V9 and GV14 may be omitted.

The power generation unit 20 includes a plurality of single cells 21 of a directly fuel supplying type. The single cell 21 includes an anode fluid passage plate 22, a cathode fluid passage plate 23, and a membrane electrode assembly (MEA) 24. The MEA 24 includes an anode, a cathode and an electrolyte membrane interposed between the anode and the cathode. The anode fluid passage plate 22 is arranged on the anode side of the MEA 24. The cathode fluid passage plate 23 is arranged on the cathode side of the MEA 24. In FIG. 1, the power generation unit 20 contains three single cells 21. The fuel cell system 1 includes a fan 25 for feeding air containing oxygen to the cathode via the cathode fluid passage plate 23. In the figure, a white arrow indicates an air flow direction. A passage outlet of the anode fluid passage plate 22 communicates with the fluid supply port 7 of the gas tank 6 by way of a line L26, for example, a pipe. With the construction mentioned above, a circulating passage is formed by path of gas-liquid separator 10 → pump P19 → line L19 → power generation unit 20 → line L26 → gas-liquid separator 10.

The removal fuel tank 27 contains fuel, for example, methanol. The removal fuel tank 27 is provided with a fuel feeding port 28 and a gas exhaust port 29. A lyophobic member 30 is stretched in the gas exhaust port 29. The fuel feeding port 28 communicates with the communication tube 5 via a line L31, for example, a pipe. The line L31 is provided with a valve V31, and with a pump P31 at a position located downstream of the valve V31. A line L32, such as a pipe, connected to the gas exhaust port 29 joins with the line L14 at a position located downstream of the valve GV14. The line L32 is provided with a check valve CV32.

The lyophobic tube 2 and the lyophobic member 4 are made of a material through which gas more easily permeates than liquid. The material may be a lyophobic porous material, for example, and the tube and the member may be formed with a film made of such a material. An example of the lyophobic porous material is a Teflon (trade mark) porous material. A pore diameter of the porous material is preferably several microns. A lyophobic porous material may also be used, which is formed in the following manner. Through-holes of submicrons are formed in a resin plate by using MEMS technology or the like, and then the resultant is lyophobic-liquid treated by Teflon (trade mark) coating or the like to thereby form a lyophobic porous material.

The lyophilic tube 3 is made of a material through which liquid more easily permeates than gas, and may be formed with, for example, a lyophilic porous material. An example of the lyophilic porous material is a polyetherimide porous material. A pore diameter of the porous material is preferably several microns. A lyophilic porous material may also be used, which is formed in the following manner. Through-holes of submicrons are formed in a resin plate by using MEMS technology or the like, and then the resultant is lyophilic-liquid treated by polyetherimide coating or the like to thereby form a lyophobic porous material.

The tube may take any shape so long as it is tubular, and its cross section shape may be circular, elliptical, triangular, rectangular, polygonal, and infinite.

Next, a method of operating the fuel cell system 1 of FIG. 1 will be described.

Fuel contained in the removal fuel tank 27 is fed from the fuel feeding port 28 to the communication tube 5 via the line L31 under pump pressure of the pump P31. When temperature of the removal fuel tank 27 increases to reach the boiling point of the fuel or higher, gas generated flows from the gas exhaust port 29 of the removal fuel tank 27, permeates the lyophobic member 30, and flows through lines L32, L14 and L9 to enter the VOC removing unit 18. In the VOC removing unit 18, an organic material and the like in the gas generated in the removal fuel tank 27 are subjected to the catalyst combustion or absorbed by an absorbent or the like.

The fuel fed to the communication tube 5 is mixed with the liquid separated from the gas-liquid two-phase flow in the mixing tank 11, and adjusted to have a desired concentration. The resultant mixed solution is supplied from the liquid feeding port 16 through the line L19 to the anode fluid passage plate 22 of the power generation unit 20, under pump pressure of the pump P19. Air containing oxygen is supplied to the cathode of the power generation unit 20 by using the fan 25. It is desirable to form grooves 23a in the surface of the cathode fluid passage plate 23, which is closer to the MEA 24, and to supply the air that is fed by the fan 25 to the entire surface of the cathode by utilizing the grooves 23a. Consequently, the reactions given by the formulae (1) and (2) progress in the power generation unit 20, to thereby generate electric power.

The anode fluid passage plate 22 discharges a gas-liquid two-phase flow, which contains the solution not reacted and hence not used for the power generation, and carbon dioxide generated by the power generation reaction. This gas-liquid two-phase flow flows through the line L26, and is fed from the fluid supply port 7 of the gas tank 6 into the lyophobic tube 2, and flows through the lyophobic tube 2. At this time, gas contained in the gas-liquid two-phase flow permeates the wall of the lyophobic tube 2 and is collected within the gas tank 6. The gas collected is fed to the VOC removing unit 18 from the gas exhaust port 8 of the gas tank 6 through the line L9.

The liquid of the gas-liquid two-phase flow flows through the lyophobic tube 2, and is fed to the lyophilic tube 3 through the communication tube 5. The liquid flowing through the lyophilic tube 3 permeates the wall of the lyophilic tube 3, and is collected within the mixing tank 11. A small amount of the gas, which is left in the liquid flowing through the lyophilic tube 3 permeates through the lyophobic member 4 of the gas exhaust tube 12 inserted in the lyophilic tube 3, and is fed to the VOC removing unit 18 through the lines L14 and L9. Within the mixing tank 11, a gas component dissolved in the liquid is sometimes evaporated into gas by temperature variation or the like. The generated gas permeates through the lyophobic member 17 of the gas exhaust port gas exhaust port 15, and flows through the lines L18, L14 and L9 and reaches the VOC removing unit 18. With regard to the gas exhaust port 15 and the lyophobic member 17, each of those may be plural in number.

In the embodiment of FIG. 1, the lyophilic tube 3 is housed in the mixing tank 11. In an alternative, the lyophilic tube 3 is housed in a tank or the like separately installed, and liquid having permeated through the wall of the lyophilic tube 3 is collected. It is desirable to reuse the collected liquid by supplying it to the mixing tank or the like.

The gas-liquid separator 10 of the present embodiment is provided with the lyophobic member 4 for cloging the flow passage of the lyophilic tube 3. With provision of the lyophobic member, a small amount of air left in the liquid, which flows through the lyophilic tube 3, is prevented from being supplied to the mixing tank 11 to thereby enhance the gas liquid separation performance. Further, it is noted that the fuel is supplied to the communication tube 5. Because of this, it is easy to keep the concentration of the fuel in the mixing tank relatively uniform.

In FIG. 1, the power generation unit 20 the cathode side of which is of a breezing type is illustrated. If necessary, air may be fed by using a pump. In this case, it is preferable to feed air to the grooves 23a of the cathode fluid passage plates 23 by using the pump. A mixed fluid of water and air, which is discharged from the cathode fluid passage plate 23, can be separated into liquid and gas, as in the case of the anode side.

As described in detail above, an excellent gas liquid separation performance is realized by arranging the lyophobic tube, the lyophilic tube and the lyophobic member in series. Where the gas-liquid separator is used, the following advantage is obtained. That is, even when the fuel cell is tilted or turned upside down, the gas come in contact with at least a part of the lyophobic tube or the lyophobic member and the liquid comes in contact with at least a part of the lyophilic tube. Therefore, it is possible to suppress degradation of the gas liquid separation performance. Further, it is prevented that liquid drops stick to the lyophobic tube and the lyophobic member, and that air bubbles attach to the lyophilic tube. Even when the air bubbles and liquid drops stick to the related components, the gas comes in contact with at least a part of the lyophobic tube or the lyophobic member, and the liquid comes in contact with at least a part of the lyophilic tube, and those contact states can be maintained. In a state that a slight amount of gas is present in the liquid and in a state that a slight amount of liquid is present in the gas, the gas or liquid phase being smaller in amount moves upward or downward by a density difference, so that it may come in contact with the permeable tube wall.

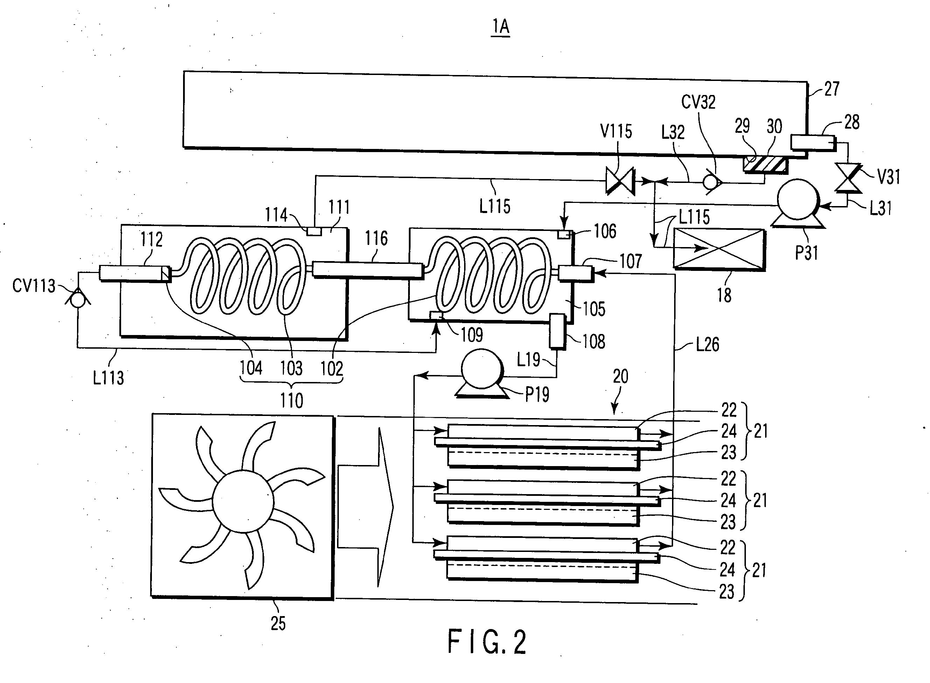

Another fuel cell system 1A according to the first embodiment of the invention will be described with reference to FIG. 2. In FIG. 2, like reference numerals are used for designating like or equivalent portions in FIG. 1, and descriptions on those portions are omitted for simplicity.

In the fuel cell system 1A, the lyophilic tube 102 and the lyophobic tube 103 are reversely arranged in a gas-liquid separator 110 when compared with those in FIG. 1, and a lyophilic member 104 is newly provided.

A mixing tank 105 is provided with a fuel supply port 106 to which fuel is supplied from a fuel tank 27, a fluid supply port 107 to which a gas-liquid two-phase flow is supplied, a liquid feeding port 108 for supplying a mixed solution from the mixing tank 105 to the anode fluid passage plates 22, and a liquid collection port 109 to which liquid collected downstream of the gas-liquid separator 110. The liquid feeding port 108 in FIG. 2 has a function similar to that of the liquid feeding port 16 in FIG. 1. A lyophilic tube 102 is housed in the mixing tank 105.

A gas-liquid two-phase flow discharged from the anode fluid passage plates 22 is supplied to the lyophilic tube 102 via the fluid supply port 107. The lyophilic tube 102 is spirally wound in order to increase its contact area with a gas-liquid two-phase flow in the lyophilic tube. The lyophilic tube 102 communicates with the lyophobic tube 103 contained in a gas tank gas tank 111 via a communication tube 116. A liquid collection tube 112 is coupled to the end of the lyophobic tube 103, opposite to the communication tube 116. The lyophilic member 104 is provided at the end of the liquid collection tube 112, which is closer to the lyophobic tube 103, and clogs a passage of fluid flowing through the lyophobic tube 103. The lyophilic member 104 may be formed with a material similar to that of the lyophilic tube 3.

The liquid collection tube 112 communicates with a liquid collection port 109 of the mixing tank 105 via a line L113 such as a pipe. The line L113 is provided with a check valve CV113. The gas tank 111 is provided with a gas exhaust port 114. The gas exhaust port 114 is coupled to a line L115 such as a pipe, which in turn is connected to a VOC removing unit 18. The line L115 is provided with a valve V115, and joins with a line L32 at a position downstream of the valve V115.

Within the mixing tank 105, a gas component dissolved in the liquid is sometimes evaporated into gas by temperature variation or the like. The generated gas, together with the liquid, is discharged from the liquid feeding port 108, flows through the anode fluid passage plates 22 to be fed to the gas-liquid separator 110.

The gas-liquid separator 110 described above provides excellent gas liquid separation performance when the fuel cell is tilted and turned upside down, and in a state that a slight amount of liquid is present in the liquid, and in a state that a slight amount of liquid is present in the gas.

### (Second Embodiment)

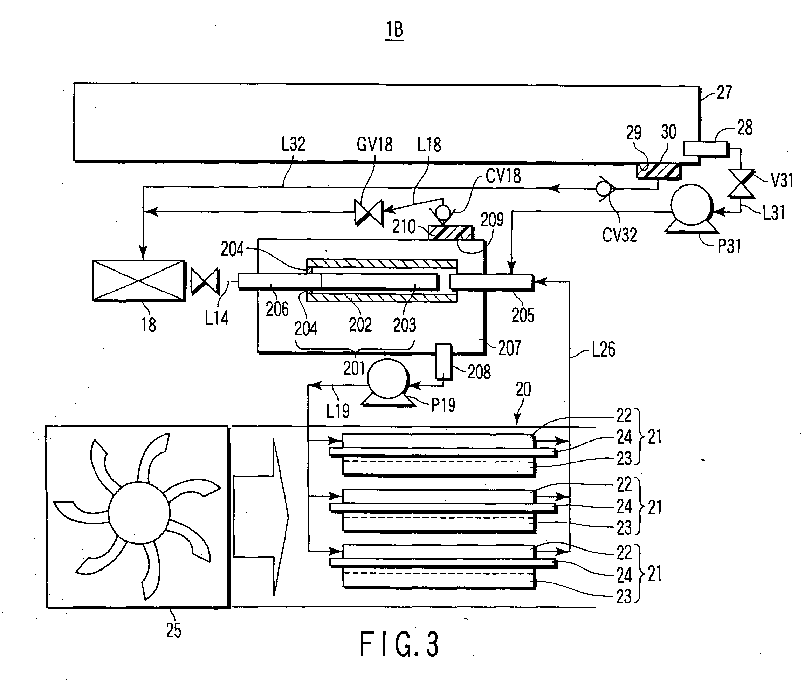

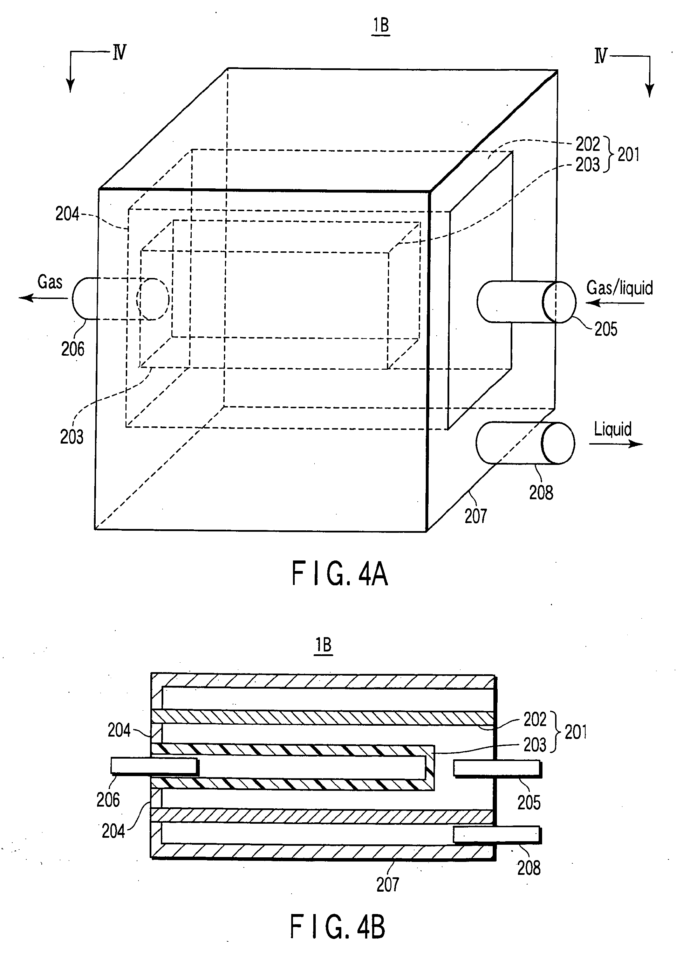

A fuel cell system 1B according to a second embodiment of the present invention will be described with reference to FIGS. 3, 4A and 4B. In FIG. 3, like reference numerals are used for designating like or equivalent portions in FIG. 1, and descriptions on those portions are omitted for simplicity.

As shown in FIG. 4B, gas-liquid separator 201 is provided with a tube 202 being lyophilic to liquid, and a tube 203 being lyophobic to liquid. The lyophobic tube 203 is closed at one end thereof. The closed end of the lyophobic tube 203 is inserted into the lyophilic tube 202. A partition wall 204 for cloging a flow of fluid flowing in the lyophilic tube 202 is provided between an outer wall of the lyophobic tube 203 and an inner wall of the lyophilic tube 202. A fluid supply port 205 to which a gas-liquid two-phase flow is fed is provided at a position located upstream of the lyophilic tube 202. A gas exhaust port 206 for discharging gas is located at the end of the lyophobic tube 203, which is opposite to the closed end thereof. In FIGS. 3, 4A and 4B, the lyophilic tube 202 and the lyophobic tube 203 are both rectangular in the cross sectional shape. In other words, the gas-liquid separator 201 shown in FIGS. 3, 4A and 4B has a structure that the wall surface of lyophobic tube 203 is confronted with the wall surface of the lyophilic tube 202.

As shown in FIG. 3, the gas-liquid separator 201 is housed in a mixing tank 207. The mixing tank 207 has a structure substantially the same as that of the mixing tank shown in FIG. 1 except that a line L26, in place of the communication tube 5, is coupled to a fluid supply port 205 of the lyophilic tube 202, and a line L14, in place of the gas exhaust tube 12, is coupled to a gas exhaust port 206 of the lyophilic tube 203. In this case, the line L14 is connected to a VOC removing unit 18. A liquid feeding port 208 provided in the mixing tank 207 has a function similar to that of the liquid feeding port 16 in FIG. 1. A gas exhaust port 29 provided in the mixing tank 207 has a function similar to that of the gas exhaust port 15 in FIG. 1. A lyophobic member 210 is stretched in the gas exhaust port 209. In FIGS. 4A and 4B, the illustration of the gas exhaust port 209 is omitted.

The lyophilic tube 202 and the lyophobic tube 203 may be those tubes, which are similar to the corresponding ones described in the first embodiment.

To enhance the contact with the liquid, it is preferable to coaxially align the lyophilic tube 202 with the lyophobic tube 203. When the mixing tank 207 is shaped like a circular or rectangular column, it is desirable that the lyophilic tube 202, the lyophobic tube 203 and the mixing tank 207 are coaxially aligned with one another. By so aligning them, the gas liquid separation performance is further enhanced.

In the fuel cell of FIG. 3, fuel is fed from the fluid supply port 205 and flows through the lyophilic tube 202. A gas-liquid two-phase flow discharged from the anode fluid passage plates 22 is introduced from the fluid supply port 205 into the lyophilic tube 202 and joins the fuel therein. The gas-liquid two-phase flow in the lyophilic tube 202 and the liquid contained in the fuel permeate through the wall of the lyophilic tube 202, and are collected in the mixing tank 207. On the other hand, the gas-liquid two-phase flow and the gas contained in the fuel permeate through the wall of the lyophobic tube 203 inserted in the lyophilic tube 202 and flow in the lyophobic tube 203. Thereafter, those are discharged from the gas exhaust port 206, and fed through a line L14 to a VOC removing unit 18. The gas generated in the mixing tank 207 permeates through a lyophobic member 210 of a gas exhaust port 209, and is fed through a line L18 to the VOC removing unit 18. The line L18 is provided with a valve GV18 at a position located downstream of a check valve CV18. The valve GV18 has a similar function to that of the valve GV14 in FIG. 1.

The gas-liquid separator 201 thus constructed provides a good gas liquid separation performance even when the fuel cell is tilted or turned upside down, and even in a state that a slight amount of gas is present in the liquid and in a state that a slight amount of liquid is present in the gas.

FIG. 4B illustrates the case of inserting the lyophilic tube and the lyophobic tube. In an alternative, the lyophilic tube and the lyophobic tube, each having a structure in which one end of it is closed, may be inserted. In this case, the gas-liquid separator is contained in the gas tank in FIG. 1. A gas-liquid two-phase flow is supplied to the lyophobic tube. Gas contained in the gas-liquid two-phase flow in the lyophobic tube permeates through the wall of the lyophobic tube and is collected in the gas tank. On the other hand, liquid contained in the gas-liquid two-phase permeates through the wall of the lyophilic tube and flows in the lyophilic tube. This liquid is collected in the mixing tank or the like separately provided, and is reused by mixing it into fuel or water.

### (Third Embodiment)

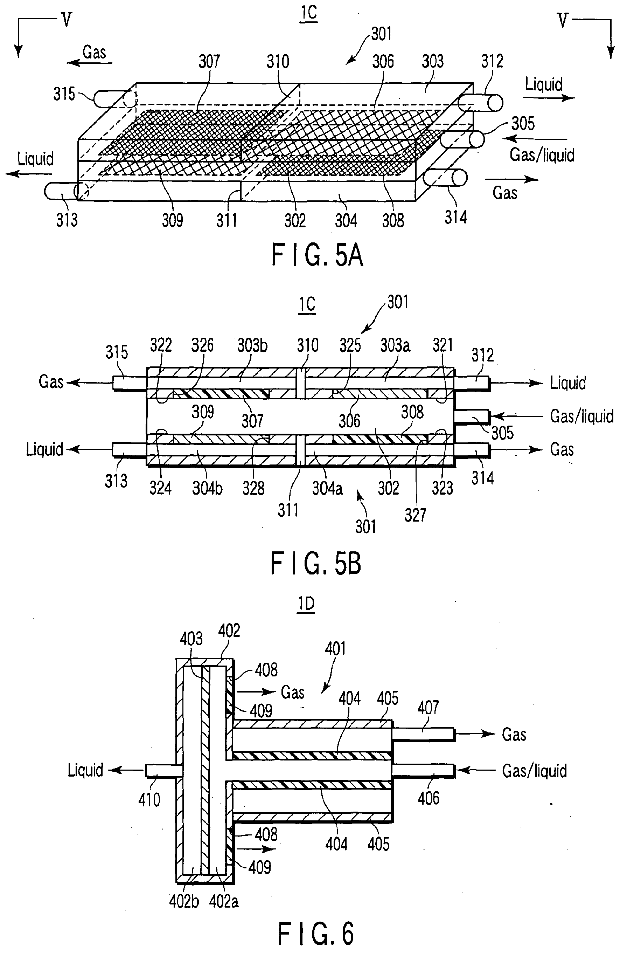

A fuel cell system 1C according to a third embodiment of the invention will be described with reference to FIGS. 5A, 5B and 3.

Gas-liquid separator 301 is composed of a main flow passage 302, which is closed at one end, and is rectangular in cross section, a first passage 303 provided in one (the upper surface in FIG. 5B) of the surfaces of the main flow passage 302, and a second first passage 304 provided in the surface (the lower surface in FIG. 5B) of the main flow passage 302, which is opposite to the surface having the first passage 303 formed therein. A fluid supply port 305 to which a gas-liquid two-phase flow is supplied is provided at the upstream end of the main flow passage 302. In FIGS. 5A and 5B, the terms "upstream" and "downstream" are used in the sense as viewed in the flowing direction of the fluid that flows through the main flow passage.

An opening 325, which allows the main flow passage 302 to communicate with the first passage 303, is formed in a boundary wall 321 between the main flow passage 302 and the first passage 303. A first lyophilic tube 306 is provided in the opening 325. At a position located downstream of the first lyophilic tube 306, an opening 326, which allows the main flow passage 302 to communicate with the first passage 303, is formed in a boundary wall 322 between the main flow passage 302 and the first passage 303. A first lyophobic tube 307 is provided in the opening 326.

On the other hand, an opening 327, which allows the main flow passage 302 to communicate with the second first passage 304, is formed in a boundary wall 323 between the main flow passage 302 and the second first passage 304 such that the opening 327 faces the first lyophilic tube 306. A second lyophobic member 308 is provided in the opening 327. An opening 328, which allows the main flow passage 302 to communicate with the second first passage 304, is formed in a boundary wall 324 between the main flow passage 302 and the second first passage 304 such that the opening 328 faces the first lyophobic tube 307. A second lyophilic member 309 is provided in the opening 328.

In the first passage 303, a first partition wall 310 is provided between the first lyophilic tube 306 and the first lyophobic tube 307. The first partition wall 310 separates the first passage 303 into an upstream section 303a including the first lyophilic tube 306 and a downstream section 303b including the first lyophobic tube 307. In the second first passage 304, a second partition wall 311 is provided between a second lyophobic member 308 and a second lyophilic member 309. The second partition wall 311 partitions the second first passage 304 into an upstream section 304a including the second lyophobic member 308 and a downstream section 304b including the second lyophilic member 309.

The upstream section 303a and the downstream section 304b are respectively provided with liquid feeding ports 312 and 313 for feeding the liquid. The downstream section 303b and the downstream section 304b are respectively provided with gas exhaust ports 314 and 315 for discharging the liquid.

There is no need of placing the gas-liquid separator 301 in the mixing tank. In the fuel cell system into which the gas-liquid separator 301 is assembled may be provided additionally with a mixing tank, which has a similar structure to that of the mixing tank 207 shown in FIG. 3 except that the gas-liquid separator is not provided.

A gas-liquid two-phase flow discharged from the anode fluid passage plates 22 flows through a line L26 and is introduced from the fluid supply port 305 into the main flow passage 302. Liquid of the gas-liquid two-phase flow in the main flow passage 302 permeates through the first lyophilic tube 306 to be collected in the upstream section 303a of the first passage, or permeates through the second lyophilic member 309 to be collected in the downstream section 304b. The collected liquid flows through the liquid feeding ports 312 and 313 and is collected in a mixing tank separately provided. On the other hand, gas of the gas-liquid two-phase flow in the main flow passage 302 permeates through the second lyophobic member 308 to be collected in the upstream section 304a, or permeates through the first lyophobic tube 307 to be collected in the downstream section 303b of the first passage. The gas flows through the gas exhaust ports 314 and 315 and is fed to a VOC removing unit 18 via a line L14. The structure of the fuel cell system of the instant embodiment is similar to that of the fuel cell system of FIG. 3, except the structure mentioned above.

The gas-liquid separator described above provides excellent gas liquid separation performance even when the fuel cell is tilted and turned upside down, and even in a state that a slight amount of liquid is present in the liquid, and in a state that a slight amount of liquid is present in the gas.

### (Fourth Embodiment)

A fuel cell system 1D according to a fourth embodiment of the present invention will be described with reference to FIGS. 6 and 3.

Gas-liquid separator 401 of the fourth embodiment includes a case 402 having a rectangular bottom surface. A lyophilic member 403 is stretched in the case 402 so as to partition an inner space of the case 402 into a first space 402a and a second space 402b. A lyophobic tube 404, which communicates to the first space 402a, is connected to the case 402. A gas collecting tube 405 is inserted into a gas collecting tube 405 having an inside diameter larger than an outside diameter of the lyophobic tube 404. An end of the gas collecting tube 405 is in contact with an end face of the case 402. A fluid supply port 406 to which a gas-liquid two-phase flow is fed is provided at the end of the lyophobic tube 404, which is opposite to the end thereof coupled to the case 402. A gas exhaust port 407 for discharging gas is provided at the end of the gas collecting tube 405, which is opposite to the end thereof being in contact with the case.

An opening 408 is formed in a wall surface of the case 402 coupled to the lyophobic tube 404. A lyophobic member 409 is stretched in the opening 408. A liquid feeding port 410 for feeding the liquid collected by the second space 402b is provided in the second space 402b of the case.

There is no need for housing the gas-liquid separator 401 in the mixing tank. In the fuel cell system into which the gas-liquid separator 401 is assembled may be provided additionally with a mixing tank, which has a similar structure to that of the mixing tank 207 shown in FIG. 3 except that the gas-liquid separator is not provided.

A gas-liquid two-phase flow discharged from the anode fluid passage plate 22 flows through a line L26, and is introduced from the fluid supply port 406 into the lyophobic tube 404. Gas of a gas-liquid two-phase flowing in the lyophobic tube 404 permeates through the wall of the lyophobic tube 404. The gas flows in the gas collecting tube 405 and reaches the gas exhaust port 407, and is fed to a VOC removing unit 18 via a line L14. The gas-liquid two-phase flow from which part of gas has been removed is fed to the first space 402a of the case 402. Liquid in this remaining gas-liquid two-phase flow permeates through the lyophilic member 403 and is collected in the first space 402a. This liquid flows through the liquid feeding port 410 and is collected in, for example, a mixing tank separately provided. On the other hand, gas left in the remaining gas-liquid two-phase flow permeates through the lyophobic member 409, and is fed through a line such as a pipe to the VOC removing unit 18. The lyophobic member 409 is mounted to the case 402 to close the opening 408. A structure of the fuel cell system is similar to that of the FIG. 3 fuel cell system except the structure mentioned above.

The gas collecting tube 405 may be omitted. It is desirable that the gas-liquid separator 401 is housed in the gas tank 111 shown in FIG. 4.

The gas-liquid separator described above provides excellent gas liquid separation performance even when the fuel cell is tilted and turned upside down, and even in a state that a slight amount of liquid is present in the liquid, and in a state that a slight amount of liquid is present in the gas. Further, a contact area of the fluid introduced into the gas-liquid separator with lyophobic member is large, so that a gas liquid separation rate is increased.

It is evident that the present invention is not limited to the embodiment mentioned above. For example, the lyophobic member may be interchanged with the lyophilic member by replacing the lyophobic tube with the lyophilic tube.

## Claims

1. A fuel cell system **characterized by** comprising:
a power generation unit (20);
a fuel supply source (27) which supplies fuel to the power generation unit;
gas-liquid separator (10, 110, 201, 301, 401) for separating a liquid-gas mixture discharged from the power generation unit into gas and liquid; and
a circulating circuit (P19, L19, 20, L26) which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator (10, 110, 201, 301, 401) comprises:
a lyophobic tube (2, 103, 203, 307, 404);
a lyophilic tube (3, 102, 202, 306) which communicates with the lyophobic tube; and
a lyophilic member (104, 309, 403) provided to clog a passage of the lyophobic tube or a lyophobic member (4, 17, 30, 210, 308, 409) provided to clog a passage of the lyophilic tube.

2. The fuel cell system according to claim 1, **characterized by** further comprising:
a mixing tank (11, 105, 207) to mix the liquid separated by the gas-liquid separator and fuel, wherein the lyophilic tube is housed in the mixing tank.

3. The fuel cell system according to claim 1, **characterized in that** at least one of the lyophobic tube (2, 103, 203, 307, 404) and the lyophobic member (4, 17, 30, 210, 308, 409) has a lyophobic porous material.

4. The fuel cell system according to claim 1,
**characterized in that** at least one of the lyophilic tube (3, 102, 202, 306) and the lyophilic member (104, 309, 403) has a lyophilic porous material.

5. A fuel cell system **characterized by** comprising:
a power generation unit (20);
a fuel supply source (27) which supplies fuel to the power generation unit;
gas-liquid separator (10, 110, 201, 301, 401) for separating a liquid-gas mixture discharged from the power generation unit into gas and liquid; and
a circulating circuit (P19, L19, 20, L26) which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator (10, 110, 201, 301, 401) comprises:
a tube lyophilic (202) to the liquid; and
a tube lyophobic (203) to the liquid, the tube being inserted into the lyophilic tube and having a closed end; and
a partition wall (13, 204, 310, 311) provided between an outer wall of the lyophobic tube and an inner wall of the lyophilic tube.

6. The fuel cell system according to claim 5, **characterized by** further comprising:
a mixing tank (11, 105, 207) to mix the liquid separated by the gas-liquid separator and fuel, wherein the gas-liquid separator is housed in the mixing tank.

7. The fuel cell system according to claim 5, **characterized in that** at least one of the lyophobic tube (2, 103, 203, 307, 404) and the lyophobic member (4, 17, 210, 308, 409) has a lyophobic porous material.

8. The fuel cell system according to claim 5,
**characterized in that** at least one of the lyophilic tube (3, 102, 202, 306) and the lyophilic member (104, 309, 403) has a lyophilic porous material.

9. A fuel cell system **characterized by** comprising:
a power generation unit (20);
a fuel supply source (27) which supplies fuel to the power generation unit;
gas-liquid separator (10, 110, 201, 301, 401) for separating a liquid-gas mixture discharged from the power generation unit into gas and liquid; and
a circulating circuit (P19, L19, 20, L26) which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator (10, 110, 201, 301, 401) comprises:
a main flow passage (302) having a closed end;
a first passage (303) provided in one of surfaces of the main flow passage;
a second first passage (304) provided in the surface of the main flow passage, which is opposite to the surface including the first passage;
a first lyophobic member (306) provided in an opening which allows the main flow passage to communicate with the first passage;
a first lyophilic member (307) provided in an opening which allows the main flow passage to communicate with the first passage;
a second lyophilic member (309) provided in an opening which allows the main flow passage to communicate with the second first passage, while facing the opening in which the first lyophobic member is provided;
a second lyophobic member (308) provided in an opening which allows the main flow passage to communicate with the second first passage, while facing the opening in which the first lyophilic member is provided;
a first partition wall (310) to partition the first passage into an upstream section and a downstream section between the first lyophobic member and the first lyophilic member; and
a second partition wall (311) to partition the second passage into an upstream section and a downstream section between the second lyophobic member and the second lyophilic member.

10. The fuel cell system according to claim 9,
**characterized in that** at least one of the lyophobic tube and the lyophobic member (306, 308) has a lyophobic porous material.

11. The fuel cell system according to claim 9, **characterized in that** at least one of the lyophilic tube and the lyophilic member (307, 309) has a lyophilic porous material.

12. A fuel cell system **characterized by** comprising:
a power generation unit (20);
a fuel supply source (27) which supplies fuel to the power generation unit;
gas-liquid separator (10, 110, 201, 301, 401) for separating a liquid-gas mixture discharged from the power generation unit into gas and liquid; and
a circulating circuit (P19, L19, 20, L26) which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator (10, 110, 201, 301, 401) comprises:
a case;
a lyophilic member (403) stretched to divide the inner space of the case into a first space (402a) and a second space (402b);
a lyophobic tube (404) which communicates with the first space; and
a lyophobic member (409) provided in an opening formed in a wall surface of the case in the first space.

13. The fuel cell system according to claim 12, **characterized in that** at least one of the lyophobic tube (404) and the lyophobic member (409) has a lyophobic porous material.

14. The fuel cell system according to claim 12, **characterized in that** at least one of the lyophilic tube and the lyophilic member (403) has a lyophilic porous material.

15. A fuel cell system **characterized by** comprising:
a power generation unit (20);
a fuel supply source (27) which supplies fuel to the power generation unit;
gas-liquid separator (10, 110, 210, 310, 401) for separating a liquid-gas mixture discharged from the power generation unit into gas and liquid; and
a circulating circuit (P19, L19, 20, L26) which communicates with the gas-liquid separator and the power generation unit, the circulating circuit feeding the liquid-gas mixture from the power generation unit to the gas-liquid separator, and feeding the separated liquid from the gas-liquid separator to the power generation unit,
wherein the gas-liquid separator (10, 110, 210, 310, 401) comprises:
a case;
a lyophilic member (403) stretched to divide the inner space of the case into a first space (402a) and a second space (402b);
a lyophilic tube (404) which communicates with the first space; and
a lyophilic member (409) provided in an opening formed in a wall surface of the case in the first space.

16. The fuel cell system according to claim 15, **characterized in that** at least one of the lyophobic tube (404) and the lyophobic member (409) has a lyophobic porous material.

17. The fuel cell system according to claim 15, **characterized in that** at least one of the lyophilic tube and the lyophilic member (403) has a lyophilic porous material.
